Europäisches Patentamt

European Patent Office

Office européen des brevets

(19)

(11)  EP 1 517 454 A2

(12)  EUROPEAN PATENT APPLICATION

(43) Date of publication:
23.03.2005 Bulletin 2005/12

(51) Int Cl.⁷: $H04B\ 1/707$

(21) Application number: 04022045.1

(22) Date of filing: 16.09.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 16.09.2003 KR 2003064102

(71) Applicant: Samsung Electronics Co., Ltd.
Suwon-city, Gyeonggi-do (KR)

(72) Inventor: Ryu, Dong-Ryeol
Suwon-si Gyeonggi-do (KR)

(74) Representative: Lang, Johannes, Dipl.-Ing.
Bardehle Pagenberg Dost Altenburg Geissler
Isenbruck,
Postfach 86 06 20
81633 München (DE)

(54)  **Apparatus and method for searching for cell and multi-path in mobile communication system**

(57)  A method for performing a third cell search process or a multi-path search process to detect a scrambling code used by a Node B or in a Mobile Station by generating at least one scrambling code; determining one of first and second methods, in which the first method calculates correlation energy values of reception signals associated with at least two scrambling codes sequentially generated with predetermined time delays, and the second method sequentially generates one scrambling code with the predetermined time delays, and calculates correlation energy values of the reception signals associated with the generated scrambling codes; calculating correlation energy values of the reception signals associated with the generated scrambling codes according to the determination result; and determining a scrambling code used by the Node B or multi-paths to be assigned to individual fingers of a rake receiver using the calculated correlation energy values associated with the scrambling codes.

FIG.2

EP 1 517 454 A2

## Description

## BACKGROUND OF THE INVENTION

Field of the Invention:

The present invention relates to a method for searching for a cell and a multi-path in an asynchronous mobile communication system. More particularly, the present invention relates to an apparatus and method for searching for a cell and a multi-path in an asynchronous mobile communication system.

Description of the Related Art:

Typically, mobile communication systems are classified into a synchronous mobile communication system or an asynchronous mobile communication system. The synchronous mobile communication system transmits data according to time zones of transmission and reception ends using a GPS satellite. The GPS satellite for use in the synchronous mobile communication system was developed by the United States for military applications. Due military and economic concerns, the asynchronous mobile communication system has been widely used in Europe. A method for establishing synchronization between transmission and reception stations in the synchronous mobile communication system and the other method for establishing synchronization between the transmission and reception stations in the asynchronous mobile communication system will hereinafter be described.

The synchronous mobile communication system uses a Forward Pilot Channel to acquire a Pseudo Noise (PN) code timing point. The forward pilot channel is exemplified by a channel in which only the PN code is spread on the assumption that data for enabling all mobile stations (MS) to perform synchronization acquisition with a Node B is not modulated. Thus, all of the MSs operated in a cell area of a specific Node B can perform PN code timing acquisition. The forward pilot channel signal is transmitted at all times. A mode system for the synchronous scheme acquires mutual synchronization between the base stations (BS) by the GPS satellite, so that it assigns different offset values to individual BSs while the same PN code is used in each of the BSs, and the BSs can be distinguished from each other. In more detail, the mode system for the synchronization scheme uses the synchronous scheme, which allows beginning points of pseudo random codes of all BSs to be timed with each other using the GPS satellite, and each MS acquires an offset value of its own Node B in such a way that synchronization acquisition of the Node B can be established.

Therefore, time synchronization has been established among all the BSs throughout the world, such that beginning points of the PN codes can coincide with each other. According to the above characteristics, each of all the BSs uses the same code, and delays a code beginning point by a unique chip number for each BS, such that it acts as a PN code in the same manner as a separate PN code having a different category.

However, the asynchronous scheme, i.e., the asynchronous mobile communication system, assigns different scrambling codes to individual BSs such that it allows the MS to discriminate among BSs without using the GPS satellite. The MS calculates slot timing on the basis of the same common synchronous channel used in all the BSs, and calculates frame timing on the basis of a secondary synchronous channel, such that it can search for the nearest BS. In more detail, cell-specific codes for discriminating among individual Node Bs are assigned to individual Node Bs, such that individual Node Bs in the asynchronous system are distinguished from each other by the assigned cell-specific codes. The asynchronous system selects 512 scrambling codes having the chip length of 38400 equal to the frame length of 10ms from among $2^{18}-1$ scrambling codes having a period of $2^{18}-1$ chips, and assigns the 512 scrambling codes to discriminate among the Node Bs. A detailed description of scrambling code usage of the asynchronous system will be described with reference to the 3GPP standard TS25.213-530. For conciseness, the present invention will be disclosed using a minimal description of scrambling code usage as needed.

However, in order to control the MS to search for its own Node B, the MS must search for individual Node Bs contained in the asynchronous system, such that all of 512 scrambling codes contained in the asynchronous system must be searched. The reason why the MS searches for all of the 512 scrambling codes contained in the asynchronous system is to inspect phases of the 512 scrambling codes, such that a long period of time is consumed when the MS searches for its own cell. Therefore, if the MS applies a general cell search algorithm to all of the scrambling codes in the asynchronous system, this operation is considered to be very ineffective. As a result, a new multi-stage cell search algorithm has been implemented. In order to implement the multi-stage cell search algorithm, a plurality of scrambling codes contained in the asynchronous system, e.g., 512 scrambling codes are divided into a predetermined number of groups, e.g., 64 groups Group 0 through Group 63. Different specific codes are assigned to each of the 64 groups to discriminate between the different code groups. Each code group includes 8 scrambling codes.

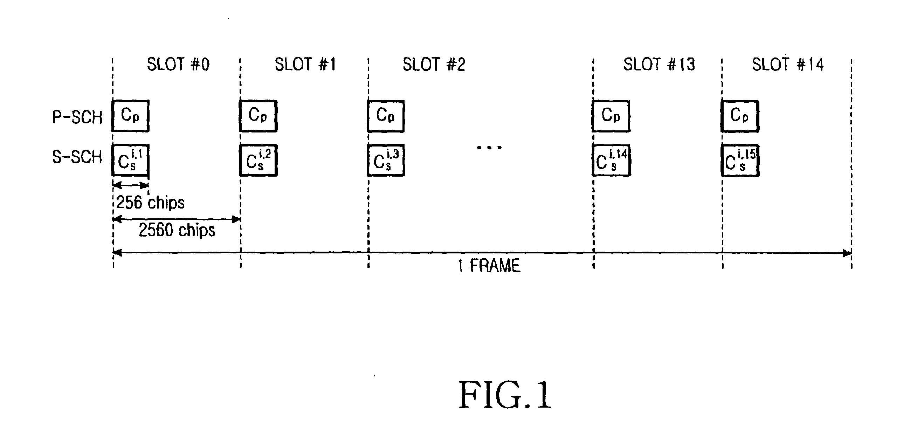

A cell search process for use in the asynchronous mobile communication system will hereinafter be described with reference to Figs. 1 through 3. Fig. 1 shows a synchronous channel configuration of the asynchronous mobile communication system. The synchronous channels are classified into a primary synchronization channel (P-SCH) and a secondary synchronization channel (S-SCH). One frame of the synchronous channel is composed of 15 slots Slot #0 through slot #14. One slot is composed of 2560 chips, so that one frame is composed of 38400 chips.

Referring to Fig. 1, one frame is composed of 15 slots. In this case, the P-PSCH and the S-SCH transmit data equal to the length of N (=256) chips at the beginning part of each slot. Orthogonality between the P-PSCH and the S-SCH is maintained, the P-PSCH data and the S-SCH data are overlapped with each other, and then the overlapped result is transmitted. CPICH (Common Pilot Channel) uses different scrambling codes for every Node B, and the period of the scrambling code is equal to the length of one frame.

A first cell search process will be described. A first synchronous code Cp for use in the P-SCH is equally applied to individual slots, is equally adapted to all the cells, and is repeated for every slot during only an interval of 256 chips equal to 1/10 of one slot. The P-SCH is adapted to allow the MS to search for a slot timing of a received signal. In more detail, the MS receives the P-SCH data, and acquires synchronization of a Node B timeslot using the first synchronous code Cp.

A second cell search process will be described. Second synchronous codes of the Node B, i.e., code-group designation codes $C_s^{i,1} \sim C_s^{i,15}$, are mapped to the S-SCH, and the mapping result is transmitted. The MS acquires timeslot synchronization over the P-SCH, and detects the code-group designation codes and frame synchronization over the S-SCH. In this case, the code-group designation code is indicative of information for determining a code group including the Node B. The MS uses a comma free code so as to detect the code-group designation codes and the frame synchronization. The comma free code is composed of 64 codewords, one code word is composed of 15 symbols, and 15 symbols are repeatedly transmitted at intervals of a frame. However, values of 15 symbols are not directly transmitted, but are mapped to one of second synchronous codes $C_s^{i,1},...., C_s^{i,15}$, and the mapped result is transmitted as previously stated. As shown in Fig. 1, i-th second synchronous code corresponding to a symbol value 'i' is transmitted to each slot. Sixty-four free codewords of the comma free code can identify 64 code groups. The comma free code has predetermined characteristics indicating that the number of cyclic shifts of individual codewords is '1'. Therefore, the second synchronous codes are correlated with the second synchronous channel during several slot intervals, and 15 cyclic shifts are checked in association with each of 64 codewords, such that code group information and frame synchronization information can be acquired. In this case, the frame synchronization is indicative of synchronization of either the timing or a phase of one period of a scrambling spread code of a spread-spectrum system. In the case of a current wideband code division multiple access (W-CDMA) system, one period of the spread code and the frame length are each equal to 10ms, such that the synchronization associated with the time of 10ms is called frame synchronization.

A third cell search process will now be described. By the first cell search process and the second cell search process, the MS can acquire slot synchronization information, Node B designation code information, and frame synchronization information over the P-SCH and the S-SCH. However, the MS does not recognize which one of 8 scrambling codes contained in a code group associated with the acquired Node B group designation code is equal to a scrambling code of a desired Node B in which the MS is included. Thus, such that it is considered that the synchronization has not been fully performed. Therefore, the MS performs correlation between received common pilot channel (CPICH) data and 8 scrambling codes contained in the code group, such that it can determine which one of the 8 scrambling codes is equal to a scrambling code to be used by the MS.

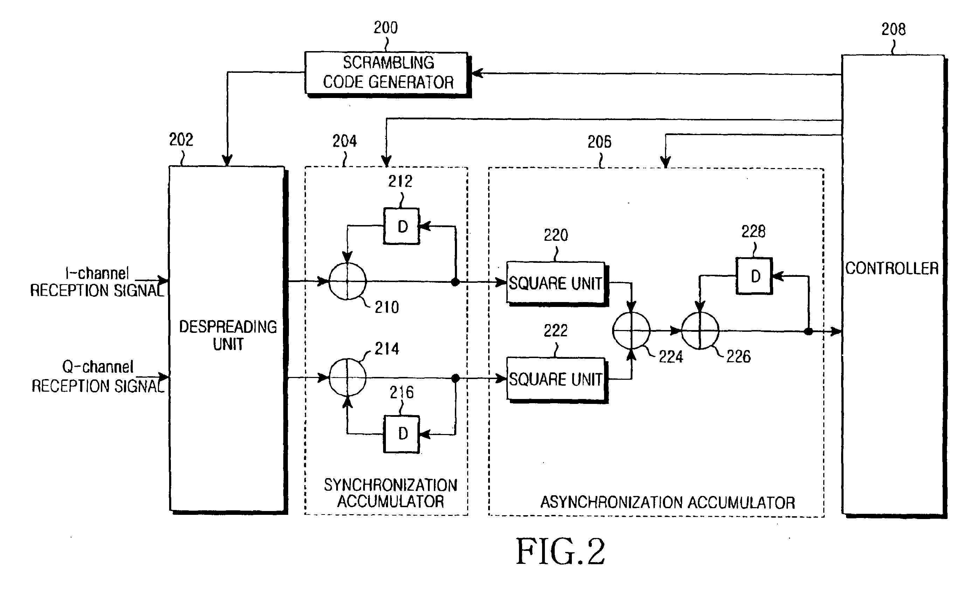

Fig. 2 is a block diagram illustrating a device for performing the third cell search process in the asynchronous mobile communication system.

Referring to Fig. 2, the device includes a despreading unit 202, a synchronization accumulator 204, an asynchronization accumulator 206, a controller 208, and a scrambling code generator 200. The despreading unit 202 despreads a received signal using a scrambling code. The received signal is divided into an 1-channel reception signal and a Q-channel reception signal. The despread signal generated from the despreading unit 202 is transmitted to the synchronization accumulator 204. The synchronization accumulator 204 for the 1-channel is comprised of an adder 210 and an accumulator 212. The synchronization accumulator 204 for the Q-channel is comprised of an adder 214 and an accumulator 216. The adder 210 adds the spread 1-channel signal received from the despreading unit 202 and the other signal received from the accumulator 212. The adder 214 adds the spread Q-channel signal received from the despreading unit 202 and the other signal received from the accumulator 216. The accumulator 212 accumulates the sum signal received from the adder 210, and the accumulator 216 accumulates the sum signal received from the adder 214. The synchronization accumulator 204 accumulates a synchronous signal a predetermined number of times, and transmits the accumulated synchronous signal to the asynchronization accumulator 206.

The asynchronization accumulator 206 is comprised of a plurality of square units 220 and 222, adders 224 and 226, and the accumulator 228. The square unit 220 receives the synchronization-accumulated I-channel signal from the synchronization accumulator 204, and squares the received 1-channel signal. The square unit 222 receives the synchronization-accumulated Q-channel signal from the synchronization accumulator 204, and squares the received Q-channel signal. The adder 225 adds the 1-channel signal received from the square unit 220 and the Q-channel signal received from the square unit 222, and outputs the added result to the adder 226. The adder 226 adds the sum signal received from the adder 224 and the other signal received from the accumulator 228. The accumulator 228 accumulates the added result signal generated from the adder 226. The asynchrononization accumulator 206 accumulates an asynchronous signal a predetermined number of times, and transmits the accumulated asynchronous signal to the controller 208.

The controller 208 stores energy values of the asynchronous accumulation signal generated from the asynchronization accumulator 206. The controller 208 establishes the number Nc of synchronization accumulation times of the synchronization accumulator 204 and the number Nn of asynchronization accumulation times of the asynchronization accumulator 206, and transmits the established information Nc and Nn to the synchronization accumulator 204 and the asynchronization accumulator 206, respectively. The controller 208 controls the scrambling code generator 200, so that it generates 8 scrambling codes at intervals of a predetermined time and transmits them to the despreading unit 202. The scrambling code generator 200 sequentially generates 8 scrambling codes upon receiving a control command from the controller 208 at intervals of a predetermined time, and transmits them to the despreading unit 202. The controller 208 compares energy values of asynchronization accumulation signals of the above eight scrambling codes generated from the asynchronization accumulator 206, and acquires the scrambling code having the highest energy value as a scrambling code used in a Node B of the MS.

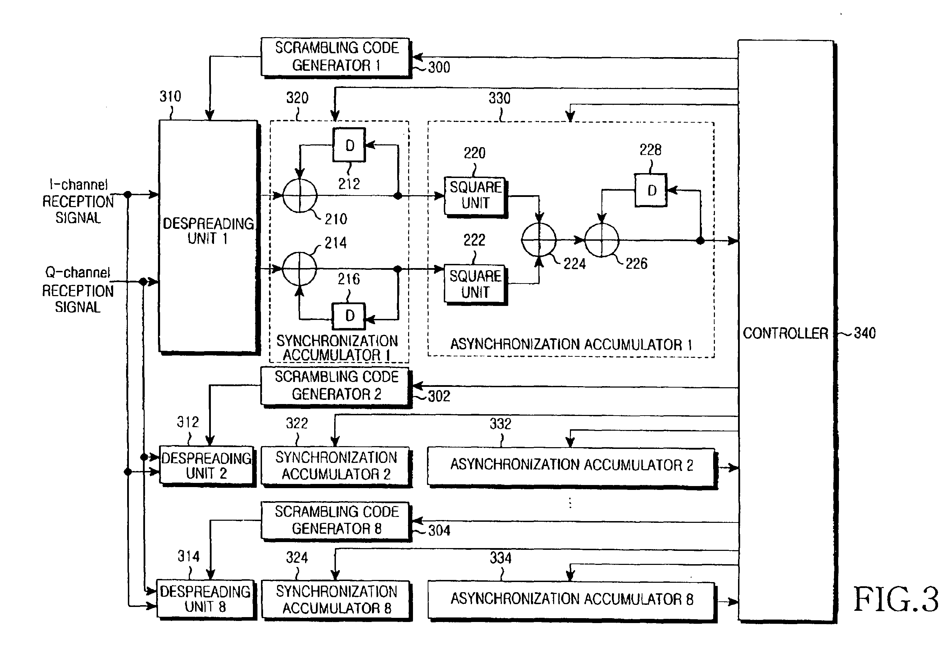

Fig. 3 shows another example of the third cell search process for use in the asynchronous mobile communication system. Each of 8 scrambling code generators generates only one scrambling code as shown in Fig. 3, whereas one scrambling code generator sequentially generates 8 scrambling codes at intervals of a predetermined time as shown in Fig. 2.

The controller 340 controls a first scrambling code generator 300 to generate a first scrambling code from among 8 scrambling codes. The controller 340 controls a second scrambling code generator 302 to generate a second scrambling code from among 8 scrambling codes. The controller 340 controls an eighth scrambling code generator 304 to generate an eighth scrambling code from among 8 scrambling codes. A first despreading unit 310 despreads the received signal using the first scrambling code generated from the first scrambling code generator 300. A second despreading unit 312 despreads the received signal using the second scrambling code generated from the second scrambling code generator 302. An eighth despreading unit 314 despreads the received signal using an eighth scrambling code generated from the eighth scrambling code generator 304.

The despread reception signal is transmitted to the synchronization accumulator. In more detail, the despread reception signal generated from the first despreading unit 310 is transmitted to the first synchronization accumulator 320. The despread reception signal generated from the second despreading unit 312 is transmitted to the second synchronization accumulator 322. The despread reception signal generated from the eighth despreading unit 314 is transmitted to the eighth synchronization accumulator 324. Operations of the first to eighth synchronization accumulators 320~324 are equal to those of the synchronization accumulator 204 of Fig. 2. Signals synchronization-accumulated by the first to eighth synchronization accumulators 320-324 are transmitted to the first to eighth asynchronization accumulators 330-334. Operations of the first to eighth asynchronization accumulators 330-334 are the same as those of the asynchronization accumulator 206 of Fig. 2. Signals asynchronization-accumulated by the first to eighth synchronization accumulators 330-334 are transmitted to the controller 340.

The controller 340 establishes the number Nc of synchronization accumulation times of the first to eighth synchronization accumulator 320-324 and the number Nn of asynchronization accumulation times of the first to eighth asynchronization accumulator 330-334, and transmits the established information Nc and Nn to the synchronization accumulators 320-324 and the asynchronization accumulators 330-334. The controller 340 sequentially arranges energy values of the asynchronization accumulation signals received from the asynchronization accumulators 330~334 in the order of energy magnitudes. The controller 340 detects a scrambling code having the highest energy value from among the arranged energy values, such that it can determine a scrambling code used by a Node B of the MS. The device of Fig. 3 has an advantage in that it greatly reduces time consumed for detecting the scrambling code used by the Node B as compared to the device of Fig. 2, but it has a disadvantage in that it unavoidably increases system complexity.

The MS performs synchronization acquisition of its Node B, and downloads code information of neighboring Node Bs. In this case, the MS performs only the third cell search process on the downloaded code information, such that it can perform cell management. The method for performing the third cell search process may be equal to the aforementioned method.

The MS must periodically check the intensity of signals of its Node B and neighboring Node Bs in order to receive an optimum Node B multi-path signal in a wireless channel environment or a handoff state. In this case, the MS acquires scrambling code information of the neighboring Node Bs from the Node B (acting as a current Node B of the MS) according to the multi-stage cell search algorithm, and then performs periodical correlation for a CPICH of a corresponding Node B. A multi-path search process for searching for multi-paths to assign different multi-paths having different spread delays to fingers of a rake receiver will hereinafter be described. The multi-path search process is adapted to acquire the diversity effect, and is distinguished from the initial cell search process performed by the aforementioned third cell search process. The multi-path search process changes phases of scrambling codes generated by the scrambling code generator 200, and performs correlation of the changed phases, such that it can be implemented.

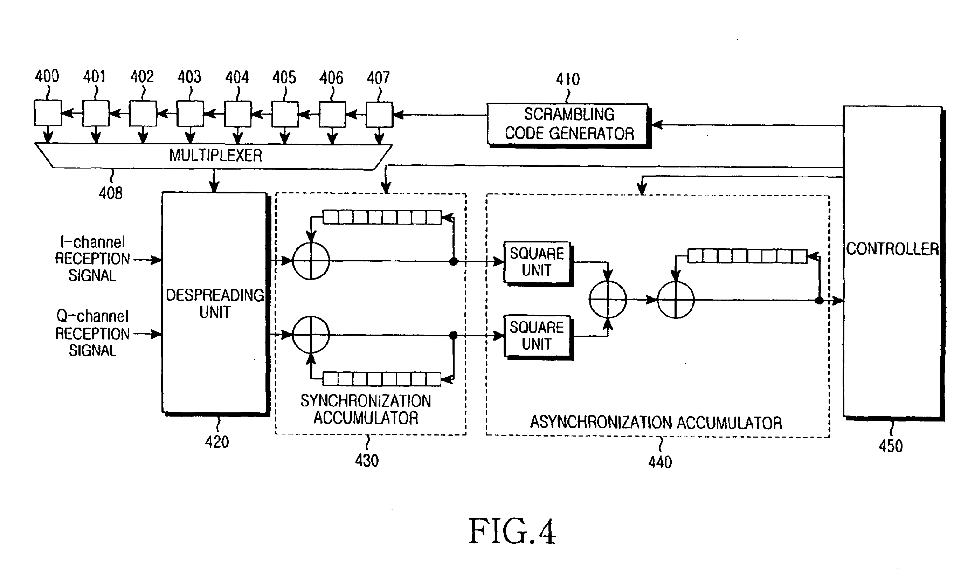

Fig. 4 is a block diagram illustrating a general multi-path detector. The scrambling code generator 410 transmits a scrambling code generated by a control command of the controller 450 to buffers 400-407 according to chip units. The buffers 400-407 can temporarily store 8 chips, and store the chip-unit scrambling codes generated from the scrambling code generator 410 in eight buffers 400~407, respectively. The multiplexer 408 transmits scrambling codes stored in the 8 buffers 400-407 to the despreading unit 420 at intervals of a predetermined time. In this case, the predetermined time is determined to be a time of '1/8 chip'. Therefore, the scrambling codes stored in the buffers 400~407 are transmitted to the despreading unit 420 at intervals of the 1/8 chip time. After the lapse of a predetermined time of '1 chip', the multiplexer 408 can transmit all the scrambling codes stored in the eight buffers 400~407.

The multiplexer 408 transmits the scrambling code stored in the first buffer 400 to the despreading unit 420 during a first 1/8 chip time. The multiplexer 408 transmits a scrambling code delayed by a predetermined time $\tau$, stored in the second buffer 401, to the despreading unit 420 during a second 1/8 chip time. The multiplexer 408 transmits a scrambling code delayed by a predetermined time $2\tau$, stored in the third buffer 402, to the despreading unit 420 during a third 1/8 chip time. After the lapse of a predetermined time of 1 chip', the multiplexer 408 transmits a scrambling code delayed by a predetermined time $7\tau$, stored in the eighth buffer 407, to the despreading unit 420.

The despreading unit 420 receives an 1-channel reception signal and a Q-channel reception signal in the above chip units. The despreading unit 420 despreads the received signals using the scrambling code received from the first buffer 400 during the first 1/8 chip time. The despreading unit 420 despreads the received signals using the scrambling code received from the second buffer 401 during the second 1/8 chip time. After the lapse of the 1-chip time, the despreading unit 420 despreads the received signals using the scrambling code received from the eighth buffer 407. The despread reception signals are transmitted to the synchronization accumulator 430, and the accumulated value is transmitted to the asynchronization accumulator 440. The asynchronization accumulator 440 accumulates the received signal according to the asynchronous scheme, and transmits the accumulated result to the controller 450. In this case, the number Nn of asynchronization accumulation times of the asynchronization accumulator 440 is determined by the controller 450.

The controller 450 establishes the number Nc of synchronization accumulation times and the number Nn of asynchronization accumulation times, and transmits the established data Nc to the synchronization accumulator 430, and also transmits the established data Nn to the asynchronization accumulator 440. Upon receipt of the asynchronization accumulation value, the controller 450 can acquire 8 correlation results having different delay times of a scrambling code of a specific cell. Individual fingers perform demodulation using the above 8 correlation results, and then the best multi-paths can be detected.

The mobile communication system shown in Figs. 2 through 4 configures a cell search configuration and a multi-path search configuration differently from each other, resulting in an increased size of the overall cell search structure. Therefore, an improved method for solving the aforementioned problems is required.

## SUMMARY OF THE INVENTION

Therefore, the present invention has been developed and overcomes the above problems, and it is an object of the present invention to provide an apparatus and method for performing a third cell search process and a multi-path search process in an asynchronous mobile communication system.

It is another object of the present invention to provide an apparatus and method for performing the third cell search process and the multi-path search process in only one configuration, resulting in a reduced volume of the overall cell search structure.

It is yet another object of the present invention to provide an apparatus and method for performing the third cell search process and the multi-path search process in only one configuration, thereby reducing thepower consumption for the search processes.

In accordance with one aspect of the present invention, the above and other objects can be accomplished by the provision of a method for performing a third cell search process or a multi-path search process to detect a scrambling code used by a Node B or in a Mobile Station (MS) for performing a first cell search process and a second cell search process in which the first cell search process acquires slot synchronization with the Node B upon receipt of a first synchronous channel signal, and the second cell search process receives a second synchronous channel signal using the acquired slot synchronization, and detects frame synchronization of the Node B and a scrambling code group including the Node B from the second synchronous channel signal, comprising the steps of: generating at least one scrambling code; determining one of first and second methods, in which the first method calculates correlation energy values of reception signals associated with at least two scrambling codes sequentially generated with predetermined time delays, and the second method sequentially generates one scrambling code with the predetermined time delays, and calculates correlation energy values of the reception signals associated with the generated scrambling codes; calculating correlation energy values of the reception signals associated with the generated scrambling codes according to the determination result; and determining a scrambling code used by the Node B or multi-paths to be assigned to individual fingers of a rake receiver using the calculated correlation energy values associated with the scrambling codes.

In accordance with another aspect of the present invention, there is provided an apparatus for performing a third cell search process or a multi-path search process to detect a scrambling code used by a Node B or in a Mobile Station (MS) for performing a first cell search process and a second cell search process in which the first cell search process acquires slot synchronization with the Node B upon receipt of a first synchronous channel signal, and the second cell search process receives a second synchronous channel signal using the acquired slot synchronization, and detects frame synchronization of the Node B and a scrambling code group including the Node B from the second synchronous channel signal, comprising: a controller for determining execution of either the third cell search process or the multi-path search process, comparing received correlation energy values with one another, and determining a scrambling code used by the Node B and multi-paths to be assigned to individual fingers of a rake receiver; a scrambling code generator for generating at least one scrambling code according to a control command of the controller; a multiplexer for sequentially generating the generated scrambling codes with predetermined time delays, and sequentially generating one scrambling code with a predetermined time delay; and an accumulator for calculating correlation energy values of reception signals of the generated scrambling codes, and transmitting the calculated result.

**BRIEF DESCRIPTION OF THE DRAWINGS**

The above and other objects, features and other advantages of the present invention will be more clearly understood from the following detailed description taken in conjunction with the accompanying drawings, in which:

Fig. 1 is a block diagram illustrating a synchronous channel structure for use in an asynchronous mobile communication system;
Fig. 2 is a block diagram illustrating a device for performing a third cell search process according to a conventional serial scheme;
Fig. 3 is a block diagram illustrating a device for performing a third cell search process according to a conventional parallel scheme;
Fig. 4 is a block diagram illustrating a multi-path search process of an MS (Mobile Station) in a mobile communication system;
Fig. 5 is a block diagram illustrating a third cell search process and a multi-path search process of an MS in a mobile communication system in accordance with a preferred embodiment of the present invention;
Fig. 6 is a block diagram illustrating a path established to allow a path selector to perform a third cell search process in accordance with a preferred embodiment of the present invention; and
Fig. 7 is a block diagram illustrating a path established to allow a path selector to perform a multi-path search process in accordance with a preferred embodiment of the present invention.

**DETAILED DESCRIPTION OF THE PREFERRED EMBODIMENTS**

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted for conciseness.

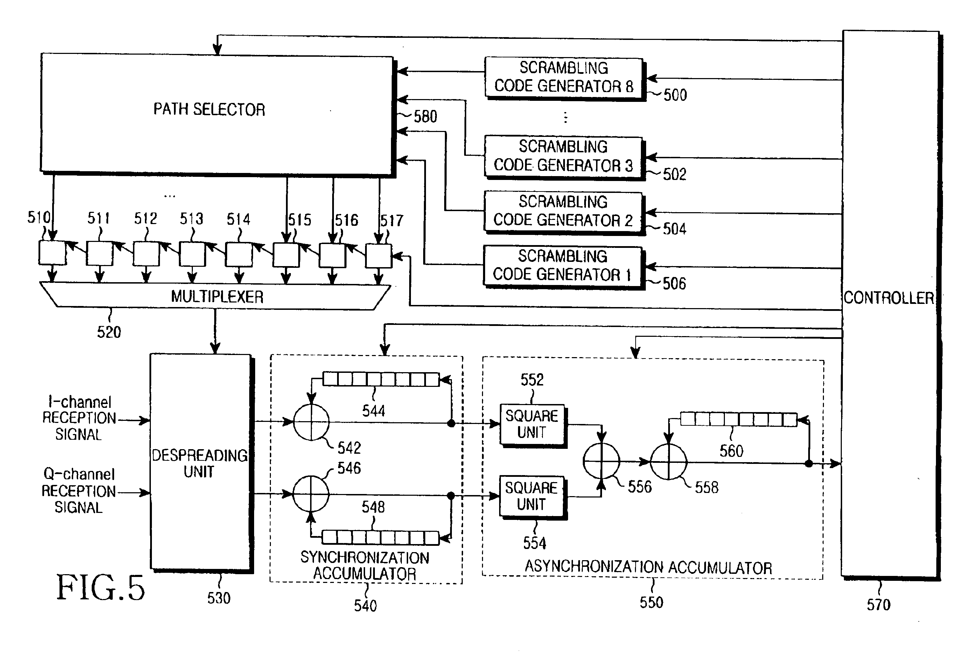

Fig. 5 is a block diagram illustrating a third cell search process and a multi-path search process of an MS in a mobile communication system in accordance with a preferred embodiment of the present invention. A method for performing the third cell search process will hereinafter be described with reference to Fig. 5.

Referring to Fig. 5, the controller 570 controls the scrambling code generators 500 through 506 to generate 8 scrambling codes included in a code group used by a Node B to which the MS belongs. The controller 570 commands the eighth scrambling code generator 500 to generate an eighth scrambling code from among 8 scrambling codes. The controller 570 commands the third scrambling code generator 502 to generate a third scrambling code from among 8 scrambling codes. The controller 570 commands the second scrambling code generator 504 to generate a second scrambling code from among 8 scrambling codes. The controller 570 commands the first scrambling code generator 506 to generate a first scrambling code from among 8 scrambling codes. The controller 570 also commands the fourth through seventh scrambling code generators (not shown) to generate a fourth through seventh scrambling code, respectively, from among the 8 scrambling codes.

The eighth scrambling code generator 500 generates the eighth scrambling code from among 8 scrambling codes according to a control command of the controller 570, and transmits it to the path selector 580. The third scrambling code generator 502 generates the third scrambling code from among 8 scrambling codes according to a control command of the controller 570, and transmits it to the path selector 580. The second scrambling code generator 504 generates the second scrambling code from among 8 scrambling codes according to a control command of the controller 570, and transmits it to the path selector 580. The first scrambling code generator 506 generates the first scrambling code from among 8 scrambling codes according to a control command of the controller 570, and transmits it to the path selector 580. The above description is also applicable to scrambling code generators four through seven, which are not shown. Although 8 scrambling code generators are shown in the drawings and detailed description of the present invention, it should be noted that one scrambling code generator can simultaneously generate a plurality of scrambling codes, and a representative example of this is described in Korean Patent Application No. 1999-27279, the entire contents of which are incorporated herein by reference.

When performing a cell search process for neighboring Node Bs, the scrambling code generator must generate a scrambling code using code information downloaded from Node Bs, instead of using a scrambling code included in a code group acquired from the second search process. For a specific cast where the number of scrambling codes associated with the neighboring Node Bs is the same or higher than '8', the number of scrambling code generators, the number of buffers, and an operation clock speed can be adaptively changed. Other methods can also be adapted as other preferred embodiments, for example, a first method for performing the aforementioned operations in association with the eight scrambling codes, and repeatedly performing the same operation in association with the remaining scrambling codes during the next chip clock, and a second method for simultaneously searching for scrambling codes of all neighboring Node Bs using a plurality of the aforementioned components.

The path selector 580 transmits the eighth scrambling code to the eighth buffer 510. The path selector 580 transmits the third scrambling code to the third buffer 515. The path selector 580 transmits the second scrambling code to the second buffer 516. The path selector 580 transmits the first scrambling code to the first buffer 517. Although the control command of the controller 570 is transmitted to only the first buffer 517 in Fig. 5, it should be noted that the control command of the controller 570 is transmitted to the first to eighth buffers 517~510. The multiplexer 520 transmits scrambling codes stored in the first to eighth buffers 517~510 to the despreading unit 530. In more detail, the multiplexer 520 transmits scrambling codes stored in the first to eighth buffers 517-510 to the despreading unit 530 at intervals of the 1/8 chip time. The multiplexer 520 transmits scrambling codes stored in the eighth buffer 510 to the despreading unit 530 during the first 1/8 chip time. The multiplexer 520 transmits scrambling codes stored in the third buffer 515 to the despreading unit 530 during the sixth 1/8 chip time. The multiplexer 520 transmits scrambling codes stored in the second buffer 516 to the despreading unit 530 during the sixth 1/8 chip time. The multiplexer 520 transmits scrambling codes stored in the first buffer 517 to the despreading unit 530 during the eighth 1/8 chip time.

The despreading unit 530 receives an 1-channel reception signal and a Q-channel reception signal in chip units. The despreading unit 530 despreads the I-channel reception signal and the Q-channel reception signal using the eighth scrambling code received from the multiplexer 520 during the first 1/8 chip time. The despreading unit 530 despreads the 1-channel reception signal and the Q-channel reception signal using the third scrambling code received from the multiplexer 520 during the sixth 1/8 chip time. The despreading unit 530 despreads the 1-channel reception signal and the Q-channel reception signal using the second scrambling code received from the multiplexer 520 during the seventh 1/8 chip time. The despreading unit 530 despreads the I-channel reception signal and the Q-channel reception signal using the first scrambling code received from the multiplexer 520 during the eighth 1/8 chip time.

The despreading unit 530 transmits the despread reception signals to the synchronization accumulator 540 in 1/8 chip units. The synchronization accumulator 540 includes adders 542 and 546 and accumulators 544 and 548. The adders 542 and 546 add the despread reception signal received from the despreading unit 530 and the accumulation signals received from the accumulators 544 and 548. The accumulator 544 stores the added signal of the adder 542, and at the same time transmits the added signal to the adder 542. The accumulator 548 stores the added signal of the adder 546, and at the same time transmits the added signal to the adder 546. The adders 542 and 546 and the accumulators 544 and 548 perform corresponding operations in 1/8 chip units. The synchronization accumulator 540 accumulates the despread reception signal received from the despreading unit 530 a predetermined number of times, and transmits the accumulated result to the asynchronization accumulator 550.

The asynchronization accumulator 550 includes square units 552 and 554, adders 556 and 558, and an accumulator 560. The square units 552 and 554 square the accumulated signal received from the synchronization accumulator 540. The squared 1-channel reception signal and the squared Q-channel reception signal are added by the adder 556. The adder 558 adds the sum signal received from the adder 556 and the accumulation signal received from the accumulator 560. The accumulator 560 accumulates the signal received from the adder 558. The accumulation interval of the asynchronization accumulator 550 is determined by a synchronization accumulation signal transmission interval of the synchronization accumulator 540. The accumulator 560 accumulates received signals while being classified according to 8 scrambling codes, and stores them. The asynchronization accumulator 550 accumulates the synchronous signal a predetermined number of times, and transmits the accumulated result to the controller 570.

The controller 570 receives accumulation signals in response to individual scrambling codes received from the asynchronization accumulator 550. The controller 570 searches for the highest accumulation signal from among the accumulation signals in response to individual scrambling codes. A scrambling code corresponding to the searched accumulation signal is indicative of a scrambling code used by a Node B to which the MS belongs. In the case of searching for neighboring cells, Node Bs to which scrambling codes each having a predetermined reference value are assigned may be managed as an active Node B. The controller 570 establishes the number Nc of synchronization accumulation times and the number Nn of asynchronization accumulation times, transmits the number Nc of synchronization accumulation times to the synchronization accumulator 540, and transmits the number Nn of asynchronization accumulation times to the asynchronization accumulator 550. As described above, the present invention can perform the third cell search process in the asynchronization mobile communication system using the aforementioned configurations of the present invention.

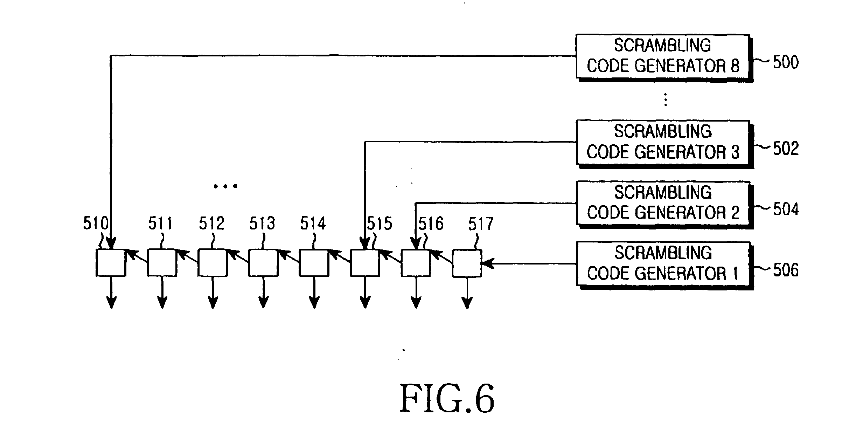

Fig. 6 shows an exemplary path selected by the path selector of Fig. 5 according to an embodiment of the present invention. Referring to Fig. 6, the eighth scrambling code generated by the eighth scrambling code generator 500 is transmitted to the eighth buffer 510. The third scrambling code generated by the third scrambling code generator 502 is transmitted to the third buffer 515. The second scrambling code generated by the second scrambling code generator 504 is transmitted to the second buffer 516. The first scrambling code generated by the first scrambling code generator 506 is transmitted to the first buffer 517. Individual buffers 510 through 517 are not connected to each other.

The multi-path search process will hereinafter be described with reference to Fig. 5. The controller 570 controls the scrambling code generators 500~506 to generate 8 scrambling codes, respectively. The controller 570 commands the eighth scrambling code generator 500 to generate the eighth scrambling code from among 8 scrambling codes. The controller 570 commands the third scrambling code generator 502 to generate the third scrambling code from among 8 scrambling codes. The controller 570 commands the second scrambling code generator 504 to generate the second scrambling code from among 8 scrambling codes. The controller 570 commands the first scrambling code generator 506 to generate the first scrambling code from among 8 scrambling codes.

The eighth scrambling code generator 500 generates the eighth scrambling code from among 8 scrambling codes according to a control command of the controller 570, and transmits it to the path selector 580. The third scrambling code generator 502 generates the third scrambling code from among 8 scrambling codes according to a control command of the controller 570, and transmits it to the path selector 580. The second scrambling code generator 504 generates the second scrambling code from among 8 scrambling codes according to a control command of the controller 570, and transmits it to the path selector 580. The first scrambling code generator 506 generates the first scrambling code from among 8 scrambling codes according to a control command of the controller 570, and transmits it to the path selector 580.

Although the present invention controls all the scrambling code generators to generate individual scrambling codes, it should be noted that other embodiments, i.e., a control method for generating only searched scrambling codes during the initial cell search process, and a control method for generating only scrambling codes contained in an active cell, can also be applied to the present invention without departing from the scope and spirit of the invention.

The path selector 580 selects one of the eight scrambling codes, and transmits the selected scrambling code to the first buffer 517. If there is only one active Node B, a scrambling code of the corresponding active Node B will be transmitted to the first buffer 517. If there are a plurality of active Node Bs, the path selector 580 may sequentially repeat the aforementioned operations in association with scrambling codes of individual Node Bs, or may simultaneously perform the aforementioned operations using a plurality of components. The first buffer 517 sequentially transmits the received scrambling code to the eighth buffer 510. Although the controller 570 transmits its control command to only the first buffer 517 as shown in Fig. 5, it should be noted that the control command of the controller 570 is transmitted to the first to eighth buffers 517~510. The multiplexer 520 transmits the scrambling code stored in the eighth buffer 510 to the despreading unit 530 during the first 1/8 chip time. The multiplexer 520 transmits a scrambling code delayed by 5τ, stored in the third buffer 515, to the despreading unit 530 during the sixth 1/8 chip time. The multiplexer 520 transmits a scrambling code delayed by 6τ, stored in the second buffer 516, to the despreading unit 530 during the seventh 1/8 chip time. The multiplexer 520 transmits a scrambling code stored in the first buffer 517 to the despreading unit 530 during the eighth 1/8 chip time.

The despreading unit 530 receives an 1-channel reception signal and a Q-channel reception signal in chip units. The despreading unit 530 despreads the I-channel reception signal and the Q-channel reception signal using the scrambling code received from the multiplexer 520 during the first 1/8 chip time. The despreading unit 530 despreads the 1-channel reception signal and the Q-channel reception signal using the 5τ-delayed scrambling code received from the multiplexer 520 during the sixth 1/8 chip time. The despreading unit 530 despreads the 1-channel reception signal and the Q-channel reception signal using the 6τ -delayed scrambling code received from the multiplexer 520 during the seventh 1/8 chip time. The despreading unit 530 despreads the 1-channel reception signal and the Q-channel reception signal using the 7τ -delayed scrambling code received from the multiplexer 520 during the eighth 1/8 chip time.

The despreading unit 530 transmits the despread reception signals to the synchronization accumulator 540 in 1/8 chip units. Operations of the synchronization accumulator 540 and the asynchronization accumulator 550 are the same as those of the synchronization and asynchronization accumulators 540 and 550 during the third cell search process. If the asynchronization accumualtion process has been completed, the controller 570 can acquire 8 correlation results having different delay times (i.e., different phases) of a scrambling code associated with a specific cell. The controller 570 can detect wireless paths each having a value higher than a reference value, which is determined to perform demodulation in the rake receiver's finger, using the aforementioned eighth correlation results. The controller 570 controls the path selector 580 to sequentially perform the multi-path search process in association with scrambling codes assigned to the active Node B. Provided that the number of the aforementioned components is determined to be a plural number, the controller 570 must control the aforementioned components to simultaneously perform the multi-path search process.

There are 8 scrambling code generators in Fig. 5, such that the multi-path search process for scrambling codes of a maximum of 8 cells can be performed. In the conventional art, the scrambling code generator must first be initialized to perform the multi-path search process for a corresponding cell scrambling code in each cell before the search process is performed. If the multi-path search process for a specific cell is completed, the conventional art must initialize the scrambling code generator and generate a scrambling code of a cell to be searched, such that it can perform the multi-path search process for another cell using the generated scrambling code. However, the present invention commands individual scrambling code generators to generate scrambling codes of cells to be searched, and sequentially uses the generated scrambling codes, such that it can perform the multi-path search process associated with neighboring cells.

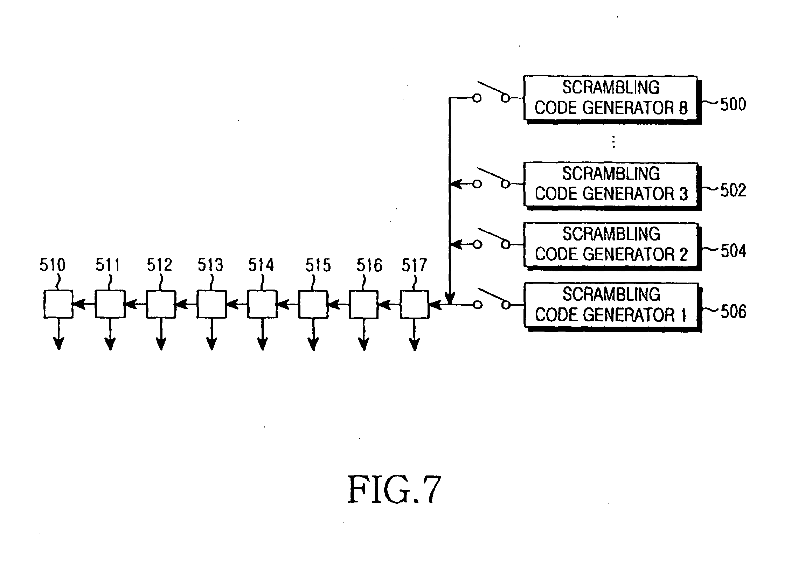

Fig. 7 is a block diagram illustrating a path selection process of the path selector for use in the multi-path search process. Referring to Fig. 7, the path selector selects one of scrambling codes generated from the eighth to first scrambling code generators 500 through 506, and transmits the selected scrambling code to the first buffer 517. The scrambling code is sequentially transmitted from the first buffer 517 to the eighth buffer 500. Therefore, the first buffer 508 to the eighth buffer 510 shown in Fig. 7 are sequentially connected to each other, which is different from Fig. 6. The path selector sequentially transmits scrambling codes generated from the first to eighth scrambling code generators 506~500 to the first buffer 517 one at a time, such that it performs the multi-path search process in association with all the scrambling codes.

As apparent from the above description, the present invention performs the third cell search process and the multi-path search process using only one configuration, resulting in reduced volume of an overall cell search structure. Furthermore, when performing the multi-path search process for a plurality of cells, the present invention pre-stores scrambling codes associated with the cells, and sequentially uses the stored scrambling codes, resulting in a reduced multi-path search time.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

**Claims**

1. A method for performing a third cell search process or a multi-path search process to detect a scrambling code used by a Node B, in a Mobile Station (MS) for performing a first cell search process and a second cell search process in which the first cell search process acquires slot synchronization with the Node B upon receipt of a first synchronous channel signal, and the second cell search process receives a second synchronous channel signal using the acquired slot synchronization, and detects frame synchronization of the Node B and a scrambling code group including the Node B from the second synchronous channel signal, comprising the steps of:

generating at least one scrambling code;
determining one of first and second methods, in which the first method calculates correlation energy values of reception signals associated with at least two scrambling codes sequentially generated with predetermined time delays, and the second method sequentially generates one scrambling code with the predetermined time delays, and calculates correlation energy values of the reception signals associated with the generated scrambling codes;
calculating correlation energy values of the reception signals associated with the generated scrambling codes according to the determination result; and
determining a scrambling code used by the Node B or multi-paths to be assigned to individual fingers of a rake receiver using the calculated correlation energy values associated with the scrambling codes.

2. The method as set forth in claim 1, wherein the third cell search process transmits the generated scrambling codes to buffers equal to the number of the scrambling codes on a one to one basis.

3. The method as set forth in claim 2, wherein the third cell search process sequentially receives the scrambling codes transmitted to the buffers from the buffers with the predetermined time delays, and acquires a scrambling code used by the Node B using the received scrambling codes.

4. The method as set forth in claim 1, wherein the multi-path search process includes the step of:

sequentially generating the generated scrambling codes with predetermined time delays when the multi-path search process is performed on at least two scrambling codes.

5. An apparatus for performing a third cell search process or a multi-path search process to detect a scrambling code used by a Node B, in a Mobile Station (MS) for performing a first cell search process and a second cell search process in which the first cell search process acquires slot synchronization with the Node B upon receipt of a first synchronous channel signal, and the second cell search process receives a second synchronous channel signal using the acquired slot synchronization, and detects frame synchronization of the Node B and a scrambling code group including the Node B from the second synchronous channel signal, comprising:

a controller for determining the execution of either the third cell search process or the multi-path search process, comparing received correlation energy values with one another, and determining a scrambling code used by the Node B and multi-paths to be assigned to individual fingers of a rake receiver;
a scrambling code generator for generating at least one scrambling code according to a control command of the controller;
a multiplexer for sequentially generating the generated scrambling codes with predetermined time delays, and sequentially generating one scrambling code with a predetermined time delay; and
an accumulator for calculating correlation energy values of reception signals of the generated scrambling codes, and transmitting the calculated result.

6. The apparatus as set forth in claim 5, further comprising:

a path selector for transmitting the generated scrambling codes to buffers equal to the number of the generated scrambling codes without being overlapped with each other, when the execution of the third cell search process is determined.

7. The apparatus as set forth in claim 5, further comprising:

a path selector for transmitting one of the generated scrambling codes to the buffers when the execution of the multi-path search process is determined.

8. The apparatus as set forth in claim 6, wherein the multiplexer sequentially receives the scrambling codes stored in the buffers with the predetermined time delays.

9. The apparatus as set forth in claim 7, wherein:

the path selector sequentially transmits the generated scrambling codes to the buffers with predetermined time delays when the multi-path search process for at least two scrambling codes is determined.

10. The apparatus as set forth in claim 7, wherein the multiplexer sequentially receives the scrambling codes stored in the buffers with the predetermined time delays.

EP 1 517 454 A2

| | SLOT #0 | SLOT #1 | SLOT #2 | SLOT #13 | SLOT #14 |
|---|---|---|---|---|---|

P-SCH $\boxed{C_p}$ $\boxed{C_p}$ $\boxed{C_p}$ $\boxed{C_p}$ $\boxed{C_p}$

S-SCH $\boxed{C_s^{i,1}}$ $\boxed{C_s^{i,2}}$ $\boxed{C_s^{i,3}}$ · · · $\boxed{C_s^{i,14}}$ $\boxed{C_s^{i,15}}$

256 chips

2560 chips

1 FRAME

# FIG.1

FIG.2

FIG.3

EP 1 517 454 A2

FIG.4

EP 1 517 454 A2

FIG.5

EP 1 517 454 A2

EP 1 517 454 A2

SCRAMBLING
CODE GENERATOR 8 — 500

⋮

SCRAMBLING
CODE GENERATOR 3 — 502

SCRAMBLING
CODE GENERATOR 2 — 504

510 511 512 513 514 515 516 517

· · ·

SCRAMBLING
CODE GENERATOR 1 — 506

# FIG.6

FIG.7

EP 1 517 454 A2